# EUROPÄISCHE PATENTSCHRIFT

(11) **EP 0 416 627 B1**
(45) Veröffentlichungstag und Bekanntmachung des Hinweises auf die Patenterteilung: **03.05.1995**
(21) Anmeldenummer: 90117201.5
(22) Anmeldetag: 06.09.1990
(51) Int. Cl.: B65G 1/137

(54) **Verfahren und Vorrichtung zum Lagern in und zum automatischen Entnehmen von Stückgutsorten aus Regalen in Grosslagern**
Method and device for storing goods and automatically selecting them from shelves in large scale stores
Procédé et dispositif pour stocker et reprendre automatiquement des sortes de marchandises de détail de rayonnages dans de grands entrepôts

(30) Priorität: 06.09.1989 DE 3929656
(43) Veröffentlichungstag der Anmeldung: 13.03.1991
(73) Patentinhaber: KNAPP LOGISTIK AUTOMATION, Ges. m.b.H., A-8042 Graz (AT)
(72) Erfinder: Mosbacher, Anton, A-8010 Graz (AT)
(74) Vertreter: Kinzebach, Werner, Dr.

(56) Entgegenhaltungen:
- AT-B- 385 256
- DE-A- 2 160 336
- DE-A- 2 226 769

## Beschreibung

Die Erfindung betrifft ein Verfahren zum Lagern vieler Stückgutsorten in und zum automatischen Entnehmen aus Regalen in Großlagern nach dem Oberbegriff des Anspruchs 1.

Die Erfindung betrifft ferner eine Vorrichtung zur Durchführung dieses Verfahrens nach dem Oberbegriff des Anspruchs 6.

Die wachsende Angebotsvielfalt auf den Märkten westlicher Industrienationen, insbesondere des Pharmagroßhandels,der oft mehrere tausend verschiedene Artikel in kürzester Zeit ausliefern muß,macht Förderverfahren zur Unterstützung der Kommissionierung und der Versandbereitstellung unentbehrlich.

Zum automatischen Entnehmen von Stückgut aus Großlagern ist daher in der US-PS 3 881 633 eine Vorrichtung beschrieben, in der Stückgut in horizontalen Magazinen gelagert wird. Um die Stücke den Magazinen zu entnehmen,schiebt ein Stempel, der über Kettengetriebe über die ganze Magazinlänge hinweg bewegbar ist, den Stapel von Stücken an, so daß das oder die vordersten Stücke über den vorderen Magazinrand auf ein unter den Magazinen laufendes Förderband fällt bzw. fallen.Diese Vorrichtung ist jedoch zum einen außerordentlich schlecht zu befüllen, zum anderen von der Konstruktion der Stempel her äußerst aufwendig.

In einer weiteren Ausführungsform des obengenannten Standes der Technik wird ein separater Greifer vorgeschlagen,der die Magazinreihe entlangfährt,in die Magazine hineingreift und eine von einem Rechner übermittelte Anzahl von Stücken über den Vorderrand des Magazins herausschiebt und Fördermitteln übergibt.Die Fördermittel geben dann die zum jeweiligen Auftrag gehörende Charge in Transportbehälter.

In der DE 32 13 119 A1 sind ein Verfahren und eine Vorrichtung zum Lagern und zum automatischen Entnehmen von Stückgut beschrieben,bei dem auf engstem Raum ein Auftrag, mehrere verschiedene Stücke in kürzester Zeit zusammenzustellen,erledigt werden kann,ohne den Entnahmevorgang beim Nachfüllen der Magazine unterbrechen zu müssen.Hierbei werden die verschiedenen Stückgutsorten in Sortenmagazine gefüllt, die in Regalen zu Blöcken zusammengefaßt sind.Durch ferngesteuerte Ausgeber werden die einzelnen Sorten den Magazinen entnommen, wenn der Transportbehälter am vorhergehenden Block angekommen ist, werden gesammelt und dann gleichzeitig in einen Transportbehälter gefüllt,wenn dieser am betreffenden Block angekommen ist.Nach der Befüllung läßt man den Transportbehälter sofort weiterfahren,wobei man die Geschwindigkeit der Transportbehälter entsprechend der Summe aus minimierter Entnahme-,Sammel- und Füllzeit so maximiert,daß das ganze in minimaler Zeit abläuft. Zur Zeitminderung wird inbesondere vorgeschlagen,zur Entnahme mehrerer Stücke einer Sorte mehrere Magazine mit derselben Stückgutsorte zu befüllen und jedem der Magazine ein Stück 1 bis n-mal zu entnehmen.Es ist auch möglich,die entnommenen Stücke von mehreren Punkten des Blockes gleichzeitig an einem einzigen Sammelpunkt zusammenzuführen,wobei der Sammelpunkt vorzugsweise in der Mitte des Blockes angeordnet ist und die Stücke vom Anfang und vom Ende des Blockes ggf. in entgegengesetzten Richtungen,zum Sammelpunkt befördert werden.Diese Verfahrensweise ist mit einer Vorrichtung durchfürbar,bei der die Regale in Blöcke mit jeweils mehreren Regalböden und den darauf befestigten Sortenmagazinen unterteilt sind.Die Regalböden sind zur Senkrechten geneigt.Die Sortenmagazine weisen an ihren unteren Enden Ausgeber auf,die das Stückgut Fördermitteln übergeben. Die Vorrichtung sowie die Fördermittel werden über eine Rechneranlage gesteuert.Diese Verfahren bzw. Vorrichtungen sind jedoch auf die Kommissionierung von häufig und in größerer Stückzahl angeforderte Produkte abgestellt.Im Pharmagroßhandel werden z.B. 40-50 % des Umsatzes mit nur etwa 2000 Produkten gemacht.Für die Kommissionierung dieser Produkte sind die bekannten Vorrichtungen hauptsächlich konzipiert.Daneben werden mit weiteren ca.5000 bis 10000 Pharmaprodukten etwa 30 % des Pharmagesamtumsatzes bestritten.
Bezüglich dieser Produkte steht der Pharmagroßhandel daher vor dem Problem,beim Lagern und Kommissionieren die Produktvielfalt zu meistern.
5000 - 10000 Stückgutsorten sollen auf möglichst engem Raum jederzeit greifbar sein ohne extremen technischen Aufwand.
Technische Lösungen der bekannten Art,bei denen jedes Sortenmagazin einen eigenen Auswerfer aufweist,sind hier ungeeignet wegen der großen Zahl der dann benötigten Auswerfer.

EP-A-403726 beschreibt einen Kommissionierautomat mit mehreren Etagen gemäß den Oberbegriffen der Ansprüche 1, 6 und 20. Jede Etage wird durch Magazine, wenigstens einen Ausschieber und wenigstens ein jeweils knapp unterhalb der Ausschieberebene verlaufendes Förderband gebildet. Es handelt sich also im Prinzip um mehrere aufeinander gesetzte einetagige Kommissionierautomaten, wie sie z.B. aus der DE-A-2 226 769 oder der AT-B-3 85 256 bekannt sind. Einen ähnlichen Offenbarungsgehalt besitzen die EP-A-369 060, 370 121 und 403 726 bei denen es sich auch um Stand der Technik nach Artikel 54(3) EPÜ handelt.

Es ist daher Aufgabe der vorliegenden Erfindung, ein Verfahren und eine Vorrichtung der eingangs genannten Art anzugeben,mit dem bzw.mit der die Lagerung und Kommissionierung einer großen Vielfalt von Stückgütern auf engerem Raume bei geringerem technischen Aufwand und in kürzester Zeit ermöglicht werden sollen, wobei die Magazine bzw. Blöcke schnell auffüllbar sein sollen,so daß die Entnahme von Stückgut entweder nicht oder nur sehr kurzzeitig unterbrochen werden muß.

Diese Aufgabe wird mit einem Verfahren nach dem Oberbegriff des Anspruchs 1 gelöst, das dadurch gekennzeichnet ist, daß man mit den Stückgut-Ausschiebern den Magazinen jeder Etage gleichzeitig das zu einem Kommissionierauftrag gehörende Stückgut entnimmt, in einem horizontal verfahrbaren, sich über alle Magazinetagen erstreckenden Sammelfahrzeug sammelt, auf oder in einer Fördereinrichtung ablegt und zur Warenauslieferungsstation befördert.

Weitere bevorzugte Ausführungsformen des erfindungsgemäßen Verfahrens ergeben sich aus den Unteransprüchen und der nachfolgenden Beschreibung.

Die obige Aufgabe wird außerdem durch eine Vorrichtung nach dem Oberbegriff des Anspruchs 6 gelöst, die gekennzeichnet ist durch ein horizontal verfahrbares, sich über alle Magazinetagen erstreckendes Sammelfahrzeug, welches die den Magazinen entnommenen Stückgüter von den Magazinetagen zu Transportmitteln befördert.

Weitere bevorzugte Ausführungsformen der erfindungsgemäßen Vorrichtung ergeben sich aus den Unteransprüchen und den Ausführungsbeispielen.

Die Erfindung hat den Vorteil, daß sehr viele Stückgut-Sorten auf engstem Raum in mehreren Etagen gelagert und gleichzeitig aus mehreren Etagen entnommen werden können. Mit einem einzigen entlang einer Magazinetage frei verfahrbaren Ausschieber kann eine sehr große Zahl von Sortenmagazinen bedient werden. Durch den Wegfall eines in das Sortenmagazin integrierten Ausschiebers verbilligen sich die Magazine sehr. Die in einem aufrecht stehenden Sortenmagazin gestapelten Schachteln einer Sorte rutschen der Schwerkraft folgend bei der Entnahme der untersten Schachtel in dem schachtartig ausgebildeten Sortenmagazin nach unten. Es bedarf daher nur eines Ausschiebers, der in eine Bodenöffnung eines Sortenmagazines eingreift und die unterste Schachtel eines Stapels horizontal ausschiebt.

Durch die erfindungsgemäße Verwendung eines besonders flach gebauten verfahrbaren Ausschiebers besteht die Möglichkeit, den vertikalen Abstand zwischen den Sortenmagazinetagen sehr klein zu halten, was wiederum den Vorteil hat, daß man viele Etagen übereinander anbringen kann. Trotzdem sind die Magazine leicht von oben nachfüllbar, denn sie können zum Nachfüllen so weit nach hinten gekippt werden, daß ihr oberes Ende frei zugänglich ist. Innerhalb einer Etage können die Sortenmagazine stehend Seitenwand an Seitenwand angeordnet werden, so daß eine weitere Optimierung der Raumausnutzung erreicht wird.

Das Problem einer möglichst raschen Erledigung eines Kommissionierungsauftrages bei größter Sortenvielfalt wird erfindungsgemäß dadurch gelöst, daß die Sortenmagazine aller Etagen eines Regales vertikal fluchten und ein sich in der Vertikalen über alle Etagen erstreckendes Sammelfahrzeug zusammen mit zugeordneten Ausschiebern an der Regalfront entlang verfahrbar ist. Das Sammelfahrzeug fährt von einer vertikalen Magazinebene zur anderen und entnimmt mit seinen zugeordneten Ausschiebern gleichzeitig auf allen Etagen die zu einem Auftrag gehörenden Stücke. In dem schmalen, schachtartigen Sammelfahrzeug ist eine von oben nach unten führende Rutschbahn für das Stückgut angebracht. Das Sammelfahrzeug kann an seinem unteren Ende durch eine fernbedienbare Verschlußklappe verschlossen sein, die dann geöffnet wird, wenn alle zu einem Kommissionierauftrag gehörenden und vom Sammelfahrzeug erreichbaren Stücke eingesammelt worden sind. Unter dem Sammelfahrzeug befindet sich in der Regel ein Förderband. Die gesammelten Stückgüter können daher entweder direkt auf dem Förderband abgelegt oder in einen auf dem Förderband herantransportierten codierten Transportbehälter hineingelegt werden. Alle Arbeitsgänge werden rechnergesteuert koordiniert und seitlich optimiert.

Die Vielfalt der gleichzeitig ansteuerbaren Sortenmagazine kann noch dadurch erhöht werden, daß man jeweils zwei Regale mit den Frontseiten parallel zueinander in einem solchen Abstand zueinander anordnet, daß ein Sammelfahrzeug gleichzeitig die zwei gegenüberliegenden Fronten zweier Regale bedienen kann.

Die exakte Positionierung der Ausschieber wird vorzugsweise durch an den Magazinen angebrachte Markierungen, z.B. durch elektromagnetisch aktivierte Positionierstifte erreicht. Die Kopplung zwischen Sammelfahrzeug und Ausschieber kann mit den üblichen mechanischen oder elektrischen Mitteln hergestellt werden. Beispielsweise können am Rahmen des Sammelfahrzeugs befestigte Mitnehmerhaken mit dem Gleitschuh des Ausschiebers in Eingriff gebracht werden. Die Ausschieber werden maßgenau unter den Magazinböden geführt und schieben bei Betätigung vorzugsweise mit Hilfe eines Zahnriemens die jeweils unterste Packung eines Magazines direkt in das Sammelfahrzeug.

Eine andere Ausführungsform des erfindungsgemäßen Verfahrens ist dann von Vorteil, wenn sowohl große Stückzahlen einer Sorte als auch eine im Vergleich zum Stand der Technik erhöhte Vielfalt zur Verfügung stehen sollen. Große Stückzahlen einer Sorte bedingen große Magazine. Beim erfindungsgemäßen Verfahren bedeutet dies, daß die Magazine lang sind, denn in einem Sortenmagazin der erfindungsgemäßen Art ist Stückgut einer Sorte so gestapelt, daß nur eine Stückgutpackung den Grundriß des Stapels bildet. Erhöhte Vielfalt bei gleichzeitig geringerer Stückzahl pro Sorte ermöglicht die Verwendung von kürzeren Sortenmagazinen. Kurze Sortenmagazine können mehretagig angeordnet werden, wie oben geschildert.

In der besagten Ausführungsform des erfindungsgemäßen Verfahrens, das die Kommissionierung großer Stückzahlen bei erhöhter Sortenvielfalt ermöglicht, kombiniert man eine einetagige Serie langer Magazine mit einer zwei- bis dreietagigen Anordnung kurzer Magazine. Vorteilhaft werden die Magazinreihen dachgiebelartig angeordnet, wobei die langen Magazine die eine Seite des Giebeldaches und die zwei- bis dreietagig angeordneten kurzen Magazine die andere Seite des Giebeldaches bilden. Die Ausschieber arbeiten in Richtung des "Dachbodens", wo sich Fördermittel, beispielsweise ein Transportband, befinden. Geneigte Rutschbleche sorgen dafür, daß die aus höher gelegenen Etagen entnommenen Stückgüter gleitend das Transportband erreichen. Bei dieser Ausführungsform können sowohl übliche Sortenmagazine mit integriertem Ausschieber als auch die in der vorliegenden Anmeldung geschilderten Sortenmagazine ohne Ausschieber, die von einem frei verfahrbaren Ausschieber bedient werden, verwendet werden. Auch hier können zahlreiche Sortenmagazine zu einem sogenannten Block zusammengefaßt werden, der von einem Ausschieber bedient wird.

Das erfindungsgemäße Verfahren und die erfindungsgemäßen Vorrichtungen werden nachfolgend anhand bevorzugter Ausführungsbeispiele, die durch Abbildungen veranschaulicht sind, erläutert. Hierbei zeigen:
- Fig. 1: Eine Ansicht einer mehretagigen Magazinanordnung in zwei sich gegenüberstehenden Regalen mit dazwischen angeordnetem Sammelfahrzeug;
- Fig. 2: eine Teil-Frontansicht einer Regalhälfte der Fig. 1 (ohne Sortenmagazine) in einer Ebene, die senkrecht zu der in Fig. 1 dargestellten Ebene liegt und daneben ein Längsschnitt durch das Sammelfahrzeug in einer Ebene, die parallel zur geschilderten Ebene liegt;
- Fig. 3: eine Frontansicht einer schematischen Darstellung einer mehretagigen Magazinanordnung gemäß Fig. 1 und daneben einen Längsschnitt durch das Sammelfahrzeug in der in Fig. 2 dargestellten Ebene;
- Fig. 4: eine Seitenansicht eines Sortenmagazins 8 in seiner Position in einem Regal.
- Fig. 5: eine Seitenansicht eines Ausschiebers in seiner Position zwischen zwei Magazinetagen in einem Regal;
- Fig. 6: eine Frontansicht der in Fig. 5 gezeigten Anordnung (in einer Ebene senkrecht zu der in Fig. 5 dargestellten Ebene);
- Fig. 7: eine Ansicht einer giebeldachförmigen Ausführungsform einer erfindungsgemäßen Vorrichtung.

Die automatische Steuerung bzw. Abwicklung eines Auftrages erfolgt analog zu der in der DE- 32 13 119 A1 beschriebenen Verfahrensweise, auf die hiermit ausdrücklich Bezug genommen wird.

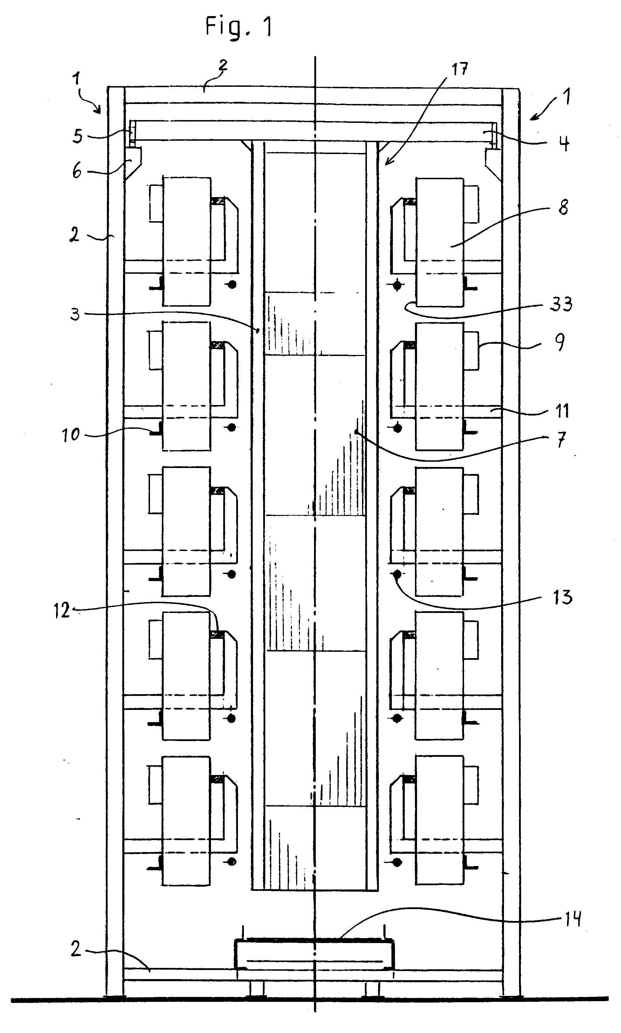

Eine besonders bevorzugte Ausführungsform der erfindungsgemäßen mehretagigen Anordnung von Sortenmagazinen ist in Figur 1 dargestellt. Zwei mehretagige Regale 1 sind hier mit einem Rahmen 2 in einer Konstruktion zusammengefaßt. Zu dieser Konstruktionseinheit gehört noch das Sammelfahrzeug 17. Es erstreckt sich vertikal über alle Etagen und horizontal über die Breite von mindestens einem Sortenmagazin, vorzugsweise jedoch über die Breite von mehreren Sortenmagazinen. Die beiden Regale 1 sind horizontal wie vertikal parallel ausgerichtet. Sie stehen Frontseite gegen Frontseite und die Frontseiten sind so beabstandet, daß das Sammelfahrzeug 17 genau zwischen die Regalfronten paßt und dort mit seinen Betätigungseinrichtungen für die Ausschieber horizontal frei verfahrbar ist. Die in Figur 1 dargestellte vorteilhafte Ausführungsform des Sammelfahrzeugs 17 hängt an einem Fahrgestell 4, dessen Rollen 5 in Laufschienen 6 eingreifen, die am oberen Ende des Regalrahmens 2 an den Regalträgern befestigt sind. Diese hängende Anordnung hat den Vorteil, daß eine relativ große Eigenstabilität des Sammelfahrzeugs ohne großen konstruktiven Aufwand bei Verwendung leichter Materialien erreichbar ist. Die exakte Ausrichtung und Positionierung ist einfacher, da sie in Richtung Schwerkraftwirkung zu erfolgen hat. Im unteren Bereich des Regales, wo die Stückgut-Ausgabe aus dem Sammelfahrzeug erfolgt, besteht optimale Freiheit und Übersichtlichkeit. In der dargestellten Ausführungsform ist unter dem unteren Ende des Sammelfahrzeugs 17 ein Transportband 14 angeordnet, auf dem entweder Transportbehälter für die Aufnahme der gesammelten Stückgüter an- und abtransportiert werden oder auf dem das gesammelte Stückgut direkt abgelegt wird.

Dieses Transportband 14 kommuniziert selbstverständlich mit den anderen Fördereinrichtungen der Gesamt-Kommissionieranlage, zu der die abgebildete Regaleinheit gehört. Im Sammelfahrzeug 17 befindet sich eine Rutschbahn 7 für die aus den Sortenmagazinen 8 auf den verschiedenen Etagen entnommenen Stückgüter . In der in Figur 1 gezeigten Ausführungsform besteht die besagte Rutschbahn aus geneigten Rutschblechen, die im Zickzackkurs von Etage zu Etage führen. In der gezeigten Ausführungsform ist die Ebene der Rutschfläche dem Betrachter zugewandt. Insgesamt sind die Rutschbleche natürlich so angeordnet, daß die Eingabe von Stückgut in das Sammelfahrzeug auf jeder Etage von rechts und links, das heißt, aus beiden sich gegenüberstehenden Regalen erfolgen kann. In der in Figur 1 dargestellten Ausführungsform kann somit aus mindestens zehn Magazinen gleichzeitig entnommen werden.

In der dargestellten Ausführungsform stehen die Sortenmagazine 8 senkrecht in den Regalen 1 in vertikal und horizontal fluchtender Anordnung. Die Stückgut-Entnahmeöffnungen befinden sich jeweils in der dem Sammelfahrzeug 17 zugewandten Stirn- bzw. Frontseite des Sortenmagazins 8, vorzugsweise an dessen unterem Ende. Die Positionierung und Befestigung der Magazine im Regal ist in der abgebildeten Ausführungsform auf sehr einfache Weise gelöst. Es gibt eine horizontale Trägerschiene 10, auf welche die Magazine 8 mit einer Steckverbindung, die sich an dem unteren Teil ihrer Rückwand befindet, aufgesteckt werden. Eine gegenüber der Trägerschiene 10 horizontal und vertikal versetzt angeordnete weitere horizontale Schiene 12 stützt die Sortenmagazine 8 im oberen Bereich ihrer Frontseite zur Frontseite hin ab. Die besagte Schiene 12 kann eine reine Anschlagsfunktion ausüben. In diesem Falle steht die Befestigung der Magazine 8 aus einer reinen 3-Punkt-Auflage. An einem Griff 9, der sich an der Rückwand des Magazines 8 befindet, die auch die Steckverbindung aufweist, kann das Magazin durch Kippen nach hinten über die Trägerschiene 10 entnommen werden.

Wie in Figur 1 dargestellt, kann die Trägerschiene 10 am horizontalen Schenkel eines Trägerarmes 11, der im Regalrahmen verankert ist, befestigt sein. Die Anschlagschiene 12 kann an einem vertikalen Schenkel des gleichen Trägerarmes 11 befestigt sein. Vorzugsweise befindet sich am frontseitigen Ende des horizontalen Teiles des Trägerarmes 11 eine parallel zu der Trägerschiene 10 und der Anschlagschiene 12 verlaufende Gleitschiene 13 für die in Figur 1 nicht gezeigten Ausschieber.

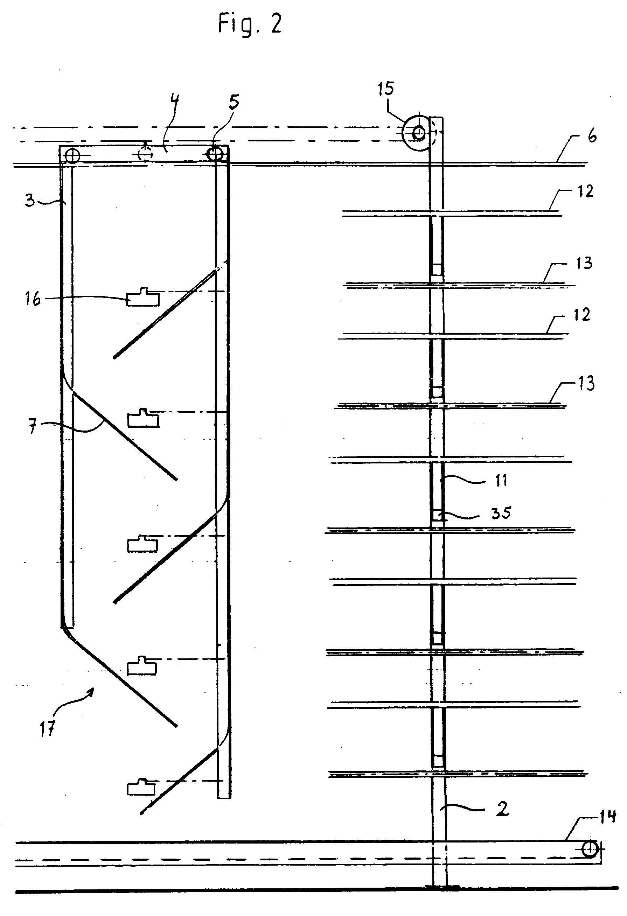

In Figur 2 ist in einer Frontansicht einer der in Figur 1 dargestellten Regalseiten der Verlauf der bereits geschilderten Schienen und die Anordnung des Sammelfahrzeugs 17 im Regal dargestellt. Am oberen Ende des Regalrahmens 2 befindet sich die Laufschiene 6 für die Rollen 5 des Fahrgestelles 4 des Sammelfahrzeugs 17. Ein Antrieb 15, z.B. ein endloser Riemen- oder Kettenantrieb, greift am Fahrgestell 4 des Sammelfahrzeugs 17 an und sorgt für eine präzise Horizontalverschiebung. Pro Magazinetage sind je eine horizontale Anschlagschiene 12 und eine Gleitschiene 13 dargestellt. Die Trägerschiene 10 ist in dieser Ausführungsform durch die davor liegende Gleitschiene 13 verdeckt und daher zeichnerisch nicht dargestellt. Der vertikale Schenkel des Trägerarmes 11 und das Stirnprofil seines horizontalen Teiles, gekennzeichnet mit der Bezugsziffer 35 sind zeichnerisch dargestellt. Im Bodenbereich ist noch der Verlauf des Transportbandes 14 angedeutet. Im daneben abgebildeten Sammelfahrzeug 17 ist die Anordnung der Rutschbleche 7 deutlicher als in Figur 1 erkennbar. Die Ebene der Figur 2 steht senkrecht zur Ebene der Figur 1.

Somit wird deutlich, daß die Ebene der Rutschbleche 7 parallel zur Stückgut-Eingabe-Richtung liegt. Dies gewährleistet eine ungehinderte Stückgut-Eingabe von den beiden sich gegenüberliegenden Frontseiten des Regales aus. Das Stückgut gelangt durch die Einlaßöffnungen 16 in das Sammelfahrzeug 17. In der in Figur 2 dargestellten Ausführungsform weist das Sammelfahrzeug 17 pro Magazinetage nur eine Einlaßöffnung 16 auf. Selbstverständlich können jedoch auch mehrere Einlaßöffnungen pro Etage vorgesehen sein.

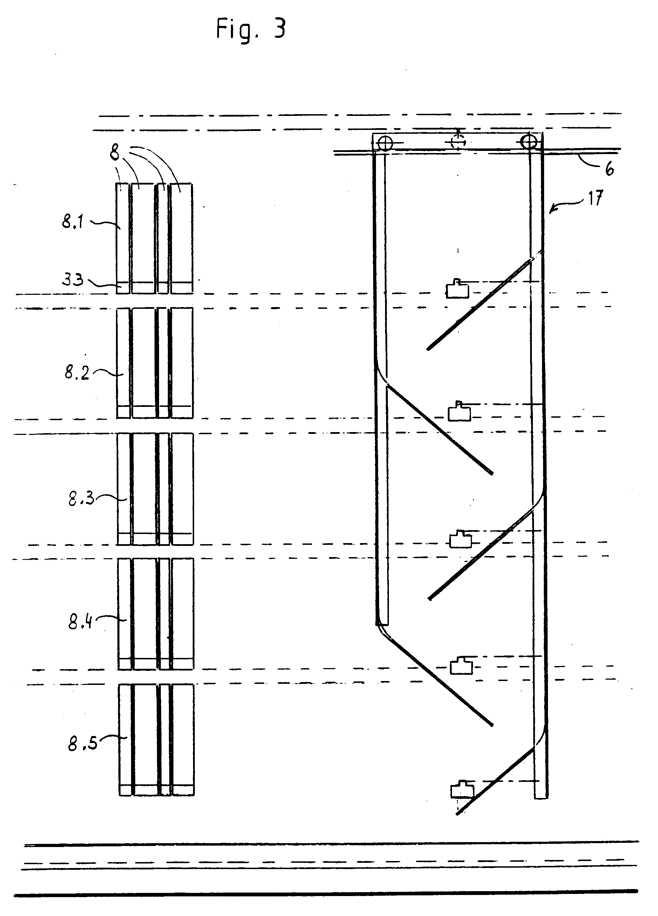

Figur 3 zeigt eine schematische Darstellung einer beliebigen Magazinanordnung im Regal 1 der Figur 1 und im Verhältnis zum Sammelfahrzeug 17. Es handelt sich erneut um eine Frontansicht einer Regalhälfte der Figur 1, wobei das Sammelfahrzeug 17 im Längsschnitt dargestellt ist, wie in Figur 2. Die zeichnerische Ebene ist also die gleiche wie in Figur 2. Die im linken Teil der Figur 3 dargestellte schematische Anordnung der Sortenmagazine 8 zeigt deren horizontal und vertikal fluchtende Anordnung. Diese fluchtende Anordnung kann sich auf die Lage der Ausgabeöffnungen 33 beschränken, das heißt, die Magazine können auch in einer Ebene oder räumlich geneigt sein. Solange die Ausgabeöffnungen 33 vertikal und horizontal fluchten, können sie allesamt von einem einzigen Sammelfahrzeug 17 und einem oder mehreren pro Etage verschiebbaren Ausschieber (in Figur 3 nicht dargestellt) bedient werden. In der in Figur 3 dargestellten Ausführungsform würde die Entnahme des Stückgutes aus den Entnahmeöffnungen 33 senkrecht zur zeichnerisch dargestellten Ebene erfolgen.

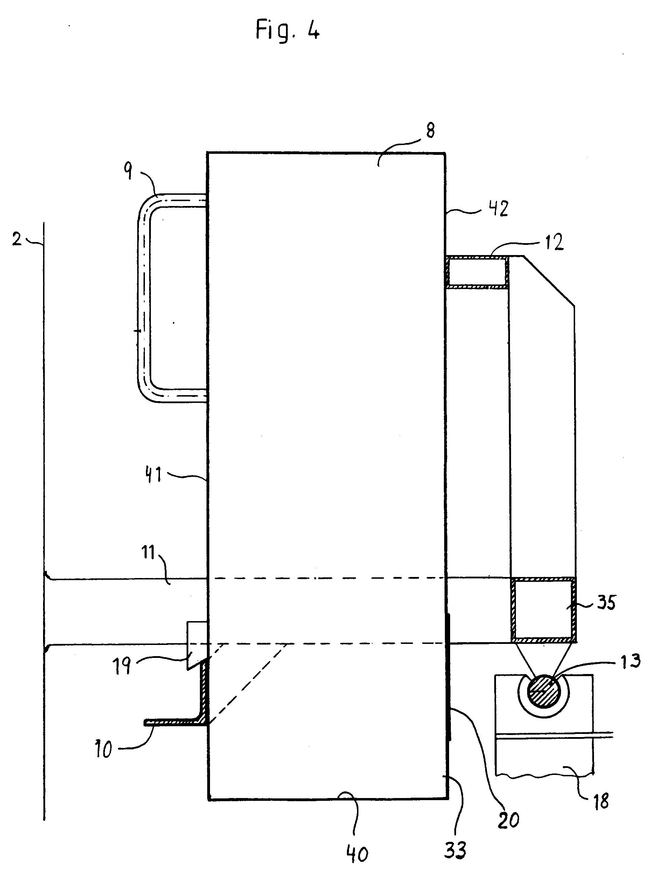

Figur 4 zeigt eine detailliertere Darstellung eines Sortenmagazines 8 und die Art seiner Befestigung im Regal. An seiner Rückseite weist es einen Griff 9 und darunter eine Befestigungsvorrichtung 19 auf. Bei der Befestigungsvorrichtung kann es sich um zwei nebeneinander auf gleicher Höhe angeordnete Befestigungshaken oder um einen Aufsteckschuh handeln. Damit wird das Magazin 8 auf die Trägerschiene 10 gesetzt bzw. gesteckt. Die Befestigungsvorrichtung 19 ist jedenfalls so beschaffen, daß das Magazin 8 zwar auf der Schiene 10 in Erstreckungsrichtung der Schiene verschoben und positioniert werden kann und auch vertikal nach oben von der Schiene abgehoben werden kann, jedoch senkrecht zur Erstreckungsrichtung der Schiene horizontal nicht verschiebbar ist. Das Sortenmagazin 8 stützt sich oben mit seiner Stirnseite 42 gegen die Anschlagschiene 12. Unmittelbar über dem Boden 40 des Sortenmagazins 8 ist in der Stirnseite 42 die Stückgut-Entnahmeöffnung 33 angebracht. Darüber befindet sich ein Schieber 20, mit dem die vertikale Höhe der Öffnung 33, je nach Größe der im Magazin gestapelten Packungen so eingestellt werden kann, daß immer nur die unterste Packung horizontal ausschiebbar ist. In der dargestellten Ausführungsform ist die Trägerschiene 10 an einem Trägerarm 11 befestigt, der seinerseits am Regalrahmen 2 festgemacht ist. Der horizontale Schenkel des Trägerarms 11 ragt nur so weit über die Stirnseite 42 der Sortenmagazine 8 hinaus, daß ein nach oben abgewinkelter vertikaler Schenkel mit der Anschlagschiene 12 und nach unten eine Befestigung für eine Gleitschiene 13 anbringbar sind.

Die Sortenmagazine 8 einer Etage sind vorzugsweise gleich lang, sie können jedoch ohne weiteres verschiedene Breite und Tiefe haben. Bei verschiedener Breite ist lediglich darauf zu achten, daß in einer vertikalen Regalebene Magazine gleicher Breite übereinander angeordnet sind. Bei verschiedener Tiefe werden die Tiefenunterschiede mit der Befestigungsvorrichtung 19 so ausgeglichen, daß die Entnahmeöffnungen an den Stirnseiten 42 der Magazine vertikal und horizontal fluchten.

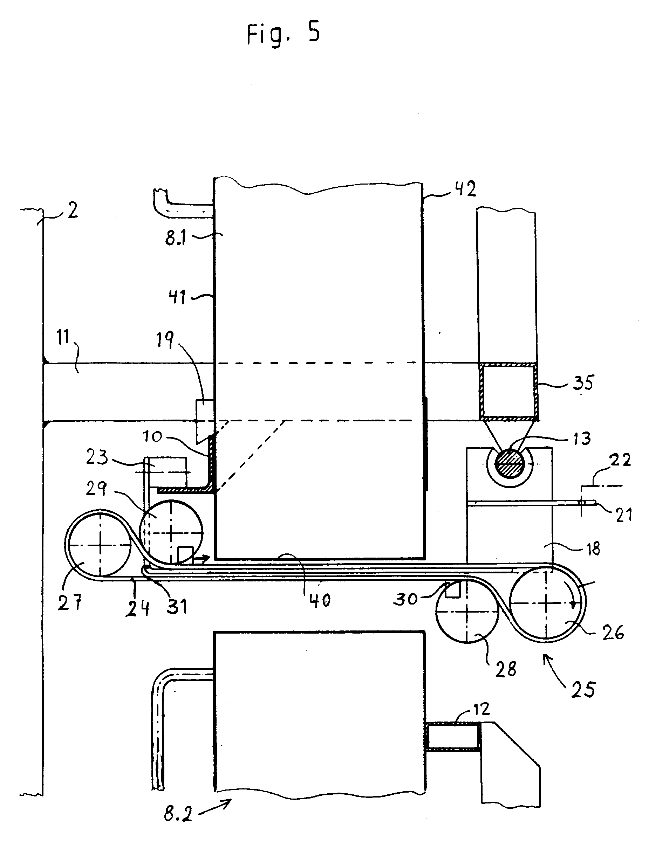

Figur 5 zeigt die Anordnung eines Zahnriemen-Ausschiebers 25 zwischen zwei Magazinetagen 8.1 und 8.2. Die Flachbauweise dieses erfindungsgemäßen Ausschiebers kommt darin besonders deutlich zum Ausdruck. Unmittelbar unter dem Boden 40 des Sortenmagazines 8.1 erstreckt sich ein Zahnriemen 24, der als Endlosriemen über eine vordere- und hintere Umlenkrolle 26 bzw. 27 führt. Der Zahnriemen 26 verläuft horizontal und im wesentlichen in dem Raum zwischen der Magazinträgerschiene 10 und der Gleitschiene 13, also senkrecht zu diesen beiden Schienen. Im Bereich zwischen den Magazinetagen 8.1 und 8.2 wird die Bauhöhe dieses Auswerfers dadurch verringert, daß man den Riemen durch Andrückrollen 28 bzw. 29 in vertikaler Richtung zusammendrückt. Zu diesem Zweck sind die Andrückrollen 28 und 29 in Laufrichtung des Riemens jeweils hinterder vorderen und hinteren Umlenkrolle 26 bzw. 27 und in vertikaler Richtung entgegengesetzt wirkend angeordnet. Mit anderen Worten, die eine Andrückrolle 29 ist auf der Oberseite und die entgegengesetzt wirkende Andrückrolle 28 ist auf der Unterseite der Riemenanordnung angebracht. Die Laufflächen der Umlenkrollen sind in der Mitte vertieft, so daß der oder die Zähne des Riemens 24 den Riemenumlauf nicht stören. Der Riemen 24 weist mindestens einen Zahn 30 auf, der in einen Schlitz im Boden 40 des Magazines 8 eingreift, der sich von der Rückseite 41 bis zur Stirnseite 42 im Boden 40 des Magazines 8 erstreckt. Vorzugsweise weist der Riemen 24 zwei gleich beabstandete Zähne 30 auf. Die besagte Rollen- und Zahnriemenanordnung ist an einem Träger 31 befestigt, der an der Regalvorderfront mit Hilfe eines Gleitschuhes 18 an der Gleitschiene 13 und hinter den Magazinen 8 an der Trägerschiene 10 in Erstreckungsrichtung der Schienen verschiebbar befestigt ist. In der in Figur 5 dargestellten Ausführungsform greift eine am Träger 31 befestigte Rolle 23 in die Schiene 10 auf der Rückseite der Magazine 8 ein. Auf diese Weise wird eine präzise Führung und sichere horizontale Verschiebbarkeit des Ausschiebers 25 erreicht. Am Gleitschuh 18 sind Einrichtungen vorgesehen, mit denen der Ausschieber 25 mit dem Sammelfahrzeug lösbar verbunden werden kann. Beispielsweise ist in Figur 5 ein Finger 21 dargestellt, in den ein vom Sammelfahrzeug 17 kommender Haken 22 eingreift. Jedenfalls weist der Ausschieber 25 Einrichtungen auf, die ein synchrones Verfahren von Ausschieber und Sammelfahrzeug ermöglichen.

Es sei jedoch betont, daß der Ausschieber 25 auch direkt am Sammelfahrzeug 17 befestigt sein kann. Bei der nicht dargestellten direkten Befestigung kann die Führung in einer Gleitschiene 13 entfallen. Es ist sogar der Wegfall der Führung an der Schiene 10 an der Rückseite der Magazine möglich.

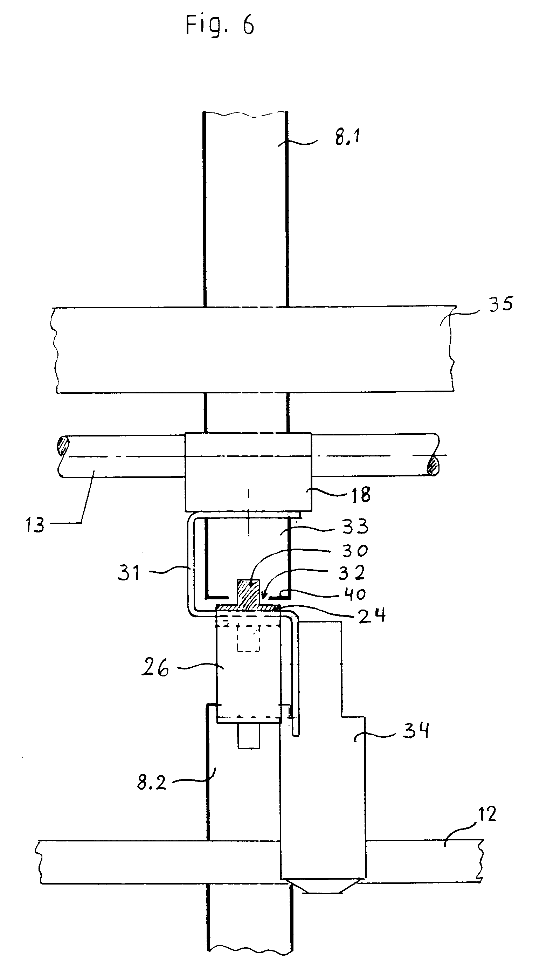

Figur 6 zeigt eine Frontansicht des Gegenstands der Figur 5. Auf diese Weise wird deutlicher, wie der Zahnriemen 24 mit dem Zahn 30 in einen Schlitz 32 im Magazinboden 40 beim Ausschieben des Stückgutes eingreift. Diese Darstellung zeigt auch, wie gering der Abstand zwischen den Magazinetagen 8.1 und 8.2 sein kann, wenn der Zahnriemen 24 mit Hilfe der in Figur 5 gezeigten Andrückrollen 28 und 29 im Bereich zwischen den Magazinen zweier benachbarter Etagen in vertikaler Richtung zusammengedrückt wird. Der Träger 31 ist in der dargestellten Ausführungsform ein Blech, das einerseits am Gleitschuh 18 angeflanscht ist und daß andererseits auch den Antriebsmotor 34 für den Ausschieber trägt. Die Gleitschiene 13 kann auch an einer parallel dazu verlaufenden Schiene 35 befestigt sein, die ihrerseits mit dem Trägerarm 11 verbunden sein kann.

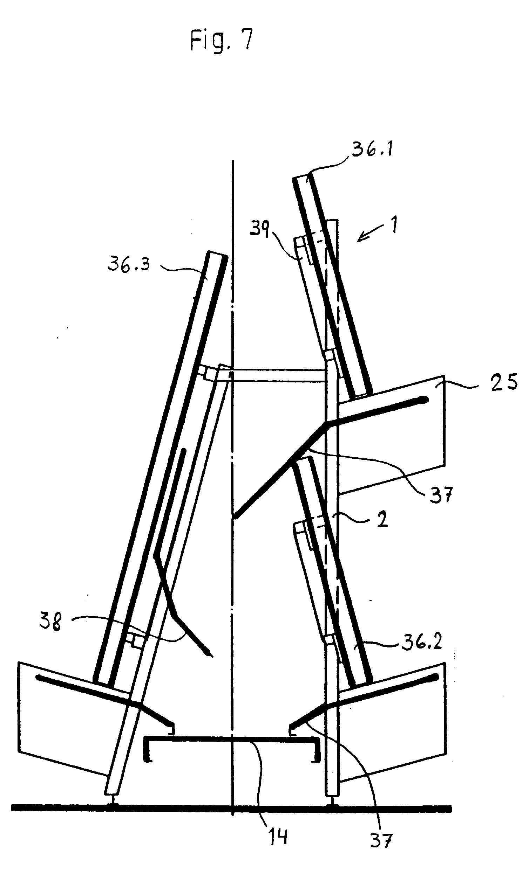

Figur 7 zeigt eine andere erfindungsgemäße Ausführungsform eines mehretagigen Regales. Bei dieser Ausführungsform ist eine zweietagige Magazinanordnung 36.1, 36.2 mit einer üblichen einetagigen Magazinanordnung 36.3 kombiniert. Die einetagig angeordneten Magazine 36.3 sind wesentlich länger als die in zwei Etagen übereinander angeordneten Magazine 36.1 und 36.2. In den langen Magazinen werden die Stückgüter untergebracht, die in großer Stückzahl benötigt werden. Die Magazine können beispielsweise 1.50 bis 3 Meter lang sein. Sie bestehen vorzugsweise aus Schienen mit U-Profil, wobei die offenen Enden des U nach innen gebogen sind. Auf diese Weise entsteht ein sich über das ganze Magazin erstreckender Sichtspalt, der die Überprüfung des Füllungszustandes erleichtert. Die Magazine werden von oben beschickt. Am unteren Ende weisen sie Ausschieber 25 auf. Dabei kann es sich um bekannte Ausschieber oder um den oben geschilderten Zahnriemenausschieber handeln. Auch in der in Figur 7 gezeigten Ausführungsform kann der Ausschieber 25 horizontal verfahrbar angeordnet sein, um eine größere Zahl von Magazinen einer Etage zu bedienen. In der dargestellten Ausführungsform hat der Regalrahmen ungefähr die Gestalt eines unsymmetrischen "A" mit einem geneigten und einem vertikalen Schenkel. Am geneigten Schenkel sind die langen Magazine 36.3 einetagig angeordnet. Am vertikalen Schenkel sind kürzere Magazine 36.1 und 36.2 zweietagig und dazugehörige Rutschbleche 37 befestigt. Alle Magazine einer Etage sind parallel angeordnet und räumlich geneigt. Die räumliche Neigung kommt darin zum Ausdruck, daß die langen Magazine 36.3 der einetagigen Anordnung einerseits und die kurzen Magazine 36.1 und 36.2 der zweietagigen Anordnung andererseits an ihrem jeweiligen oberen Einfüllende einen geringeren Abstand voneinander haben als an der Basis, wo die Entnahme erfolgt. Auf diese Weise ergibt sich eine giebeldachartige Anordnung. Dabei können die Sortenmagazine einer Etage in der Dachebene ebenfalls geneigt sein. Die Ausgabe des Stückgutes erfolgt in Richtung "Dachboden"' das heißt in den von den Giebeldachflächen umschlossenen Raum. Leit- und Ablenkbleche 37 bzw. 38 führen das entnommene Stückgut so, daß es etwa in der Mitte des "Dachbodens" auf dort angeordneten Fördermitteln, z.B. einem Förderband 14, abgelegt wird.

## Patentansprüche

1. Verfahren zum Lagern vieler Stückgutsorten in und zum automatischen Entnehmen aus Regalen in Großlagern, bei dem man jeweils eine Stückgutsorte in ein Sortenmagazin einlegt und darin stapelt,wobei die Bodenfläche des Sortenmagazins innen ungefähr der größten Außenfläche des darin zu stapelnden Stückguts entspricht,
die Sortenmagazine in Regale einordnet,
mit Hilfe ferngesteuerter Ausschieber das Stückgut den Magazinen entnimmt,die
zu einem Kommissionierauftrag gehörenden Stückgüter einem kodierten Kommissionierbehälter zuführt und diesen nach der Befüllung rechnergesteuert und automatisch zur Warenauslieferungsstation befördert,
wobei man die Sortenmagazine in mehretagigen Regalen horizontal so ausrichtet,daß die Entnahmeöffnungen in der bodenseitigen Stirnwand der Sortenmagazine horizontal fluchten,
und man jeder Magazinetage mindestens einen Stückgut-Ausschieber zuordnet und damit den Magazinen jeder Etage gleichzeitig das zu einem Kommissionierauftrag gehörende Stückgut entnimmt, dadurch gekennzeichnet, daß man das Stückgut in einem horizontal verfahrbaren, sich über alle Magazinetagen erstreckenden Sammelfahrzeug sammelt,auf oder in einer Fördereinrichtung ablegt und zur Warenauslieferungsstation befördert.

2. Verfahren nach Anspruch 1,
**dadurch gekennzeichnet**,
daß man die Sortenmagazine vertikal und horizontal so ausrichtet,daß die Entnahmeöffnungen vertikal und horizontal fluchten,
und daß man den Magazinen jeweils einer vertikalen Flucht die Auftragsstückgüter gleichzeitig entnimmt.

3. Verfahren nach Anspruch 1 oder 2,
**dadurch gekennzeichnet,**
daß man zwei mehretagigen parallel angeordneten Regalen gleichzeitig die zu einem Kommissionierauftrag gehörenden Stückgüter entnimmt.

4. Verfahren nach einem der Ansprüche 1 - 3,
**dadurch gekennzeichnet**,
daß man Sammelfahrzeug und Stückgut Ausschieber gemeinsam an der Regalfront entlang von Entnahmestelle zu Entnahmestelle verschiebt.

5. Verfahren nach einem der vorhergehenden Ansprüche,
**dadurch gekennzeichnet**,
daß man das Entleeren des Sammelfahrzeugs und die Tätigkeit der Fördereinrichtung rechnergesteuert so koordiniert, daß ein kodierter Kommissionierbehälter für die Aufnahme und den Weitertransport der gesammelten Stückgüter zur Verfügung steht, sobald der Kommissionierauftrag erledigt ist.

6. Vorrichtung zur Durchführung des Verfahrens nach einem der vorhergehenden Ansprüche 1 - 5, umfassend ein mehretagiges Regal (1) mit Sortenmagazinen (8) auf jeder Etage und
mindestens einen Stückgut-Ausschieber (25) auf jeder Etage und mindestens eine Rechneranlage, die fernbetätigbare Ausschieber (25) zum Entnehmen des Stückgutes aus den Sortenmagazinen (8) und Fördermittel (14) oder auf Transportbändern (14) geführte Behälter, denen das Stückgut übergeben wird, steuert,
gekennzeichnet durch ein horizontal verfahrbares, sich über alle Magazinetagen erstreckendes Sammelfahrzeug (17), welches die den Magazinen (8) entnommenen Stückgüter von den Magazinetagen zu Transportmitteln (14) befördert.

7. Vorrichtung nach Anspruch 6,
**dadurch gekennzeichnet**,
daß die Sortenmagazine (8) eine Längserstreckung haben, die größer ist als ihre Breite oder Tiefe,
ihre Längsachse im wesentlichen vertikal angeordnet ist, jedes Sortenmagazin (8) in der bodenseitigen Stirnwand eine Entnahmeöffnung (33) aufweist, die Bodenkanten der Entnahmeöffnungen (33) aller Sortenmagazine einer Etage horizontal fluchten,
die Mitten der Bodenkanten der Entnahmeöffnungen (33) der Sortenmagazine (8) verschiedener Etagen vertikal fluchten, die Sortenmagazine (8) neben den Entnahmeöffnungen (33) Positionierungsmittel für die Ausschieber (25) aufweisen, die Ausschieber (25) vor und/oder unter dem bodenseitigen Ende der Magazine (8) horizontal verfahrbar angeordnet sind und das Sammelfahrzeug (17) mit den Ausschiebern (25) lösbar verbunden ist.

8. Vorrichtung nach Anspruch 6 oder 7,
**dadurch gekennzeichnet**,
daß das Regal (1) auf jeder Etage eine horizontale Gleitschiene (13) für die Ausschieber (25), eine horizontale Trägerschiene (10) zum Tragen der Magazine (8) und eine horizontale Anschlagschiene (12) zur Positionierung der Magazine (8) aufweist.

9. Vorrichtung nach Anspruch 8,
**dadurch gekennzeichnet**,
daß die Gleitschiene (13), die Magazinträgerschiene (10) und die Anschlagschiene (12) an Trägerarmen (11) befestigt sind, die ihrerseits am Regalrahmen (2) befestigt sind, wobei die Trägerarme (11) einen horizontalen und einen vertikalen Schenkel aufweisen, der horizontale Schenkel am einen Ende mit dem Regalrahmen (2) verbunden ist, am gegenüberliegenden Ende den vertikalen Schenkel aufweist, am horizontalen Schenkel außerdem die Magazinträgerschiene (10) und die Gleitschiene (12) befestigt sind, die Anschlagschiene (12) am Ende des vertikalen Schenkels befestigt ist und die drei genannten Schienen so zueinander angeordnet sind, daß zwischen der Trägerschiene (10) einerseits und Gleitschiene (13) und Anschlagschiene (12) andererseits die Sortenmagazine (8) aufrecht stehen.

10. Vorrichtung nach einem der Ansprüche 8 oder 9,
**dadurch gekennzeichnet,**
daß die Sortenmagazine (8) Befestigungsmittel (9,10) aufweisen, mit denen eine lösbare Steckverbindung zur Trägerschiene (10) herstellbar ist.

11. Vorrichtung nach einem der Ansprüche 6 bis 10,
**dadurch gekennzeichnet,**
daß das Sammelfahrzeug (17) schacht- bzw. turmartig ausgebildet ist und in seinem Inneren eine vom Niveau der obersten Magazinetage bis mindestens zum Niveau der untersten Magazinetage führende Rutschbahn (7) für das aus den Sortenmagazinen (8) entnommene Stückgut aufweist.

12. Vorrichtung nach Anspruch 11,
**dadurch gekennzeichnet,**
daß die Rutschbahn (7) im schachtartigen Sammelfahrzeug (17) aus zur Vertikalen geneigten Rutschflächen besteht, wobei jeweils einer Magazinetage ein Rutschblech zugeordnet ist, das jeweils mit seinem oberen Ende am Rahmen (3) des Sammelfahrzeugs (17) befestigt ist und dessen unteres Ende frei im Innenraum des schachtartigen Sammelfahrzeuges (17) ungefähr auf dem Niveau endet, wo das darauffolgende Rutschblech (7) an einem gegenüberliegenden Rahmenteil (3) des Sammelfahrzeuges (17) befestigt ist, und wobei der Abstand zwischen dem freien Ende des einen Rutschbleches und dem Anfang des anderen Rutschbleches so groß ist, daß das der Schwerkraft folgende Stückgut auf seinem Weg nach unten nicht behindert ist.

13. Vorrichtung nach Anspruch 11 oder 12,
**dadurch gekennzeichnet,**
daß das Sammelfahrzeug (17) an seinem oberen Ende ein Fahrgestell (4) mit Rollen (5) aufweist, mit denen es mit Hilfe eines Antriebs (15) auf einer Schiene (6) an der Regalfront entlang verfahren werden kann.

14. Vorrichtung nach einem der Ansprüche 11 bis 13,
**dadurch gekennzeichnet,**
daß das Sammelfahrzeug (17) auf dem Niveau der Entnahmeöffnungen (33) der Sortenmagazine (8) jeder Regaletage eine den Entnahmeöffnungen (33) der Sortenmagazine (8) zugewandte Einlaßöffnung (16) für das entnommene Stückgut aufweist.

15. Vorrichtung nach einem der Ansprüche 8 bis 14,
**dadurch gekennzeichnet,**
daß die Stückgut-Ausschieber (25) jeweils mit einem Gleitschuh (18) an der Gleitschiene (13) verschiebbar befestigt sind, wobei der Gleitschuh (18) Verbindungsmittel (21,22) zum Sammelfahrzeug (17) aufweist , die es ermöglichen, die Ausschieber (25) und das Sammelfahrzeug (17) gemeinsam entlang der Regalfront zu verfahren.

16. Vorrichtung nach Anspruch 15,
**dadurch gekennzeichnet,**
daß der Ausschieber (25) einen endlosen Zahnriemen (24) mit mindestens einem Zahn bzw. Nocken (30) aufweist, der über eine vordere Umlenkrolle (26) und eine hintere Umlenkrolle (27) parallel zum Boden (40) des Sortenmagazins (8) so geführt wird, daß der Zahn bzw. Nocken (30) in einen Schlitz (32) im Boden (40) des Sortenmagazins (8) eingreift, wobei die vordere Umlenkrolle (26) an der Vorderfront des Regals (1) bzw. der Sortenmagazine (8) und die hintere Umlenkrolle an der Rückseite (41) der Sortenmagazine (8) angeordnet sind.

17. Vorrichtung nach einem der Ansprüche 15 oder 16,
**dadurch gekennzeichnet,**
daß der Ausschieber (25) an der Regalvorderfront vom Gleitschuh (18) an der Gleitschiene (13) und an der Rückseite (41) der Magazine (8) an der Trägerschiene (10) geführt ist.

18. Vorrichtung nach einem der Ansprüche 15 bis 17,
**dadurch gekennzeichnet,**
daß zwischen der vorderen Umlenkrolle (26) und der hinteren Umlenkrolle (27) je eine vordere Andrückrolle (28) und eine hintere Andrückrolle (29) angeordnet sind, die den Zahnriemen (24) des Ausschiebers (25) im Bereich der Bodenfläche (40) des Sortenmagazins (8) in vertikaler Richtung so weit wie möglich zusammendrücken.

19. Vorrichtung nach einem der Ansprüche 6 bis 18,
**dadurch gekennzeichnet,**
daß zwei mehretagige Regale (1) mit den Frontseiten parallel so beabstandet angeordnet sind, daß ein zwischen den Regalen (1) verfahrbares Sammelfahrzeug (17) mit den ihm zugeordneten Ausschiebern (25) gleichzeitig Stückgut aus beiden Regalen entnehmen kann.

20. Vorrichtung zum Lagern vieler Stückgutsorten in und zum automatischen Entnehmen aus einem Regal, umfassend ein mehretagiges Regal (1) mit Sortenmagazinen (8) auf jeder Etage,
und mindestens einen Stückgut-Ausschieber (25) auf jeder Etage, und mindestens eine Rechneranlage, die fernbetätigbare Ausschieber (25) zum Entnehmen des Stückgutes aus Sortenmagazinen (8) und Fördermittel (14) oder auf Transportbändern (14) geführte Behälter, denen das Stückgut übergeben wird, steuert,
**dadurch gekennzeichnet,**
daß das Regal (1) nur zwei bis drei Sortenmagazinetagen aufweist und von jeder Etage ein Rutschblech (37), gegebenenfalls in Zusammenwirkung mit einem Ablenkblech (38) zu einem Transportband (14) in der Nähe des Regalbodens führt, wobei das Rutschblech die dem Magazin (8) entnommenen Stückgüter von der jeweiligen Magazinetage zu dem Transportband (14) befördert.

21. Vorrichtung nach Anspruch 20,
**dadurch gekennzeichnet,**
daß das Regal (1) im Querschnitt die Form eines unsymmetrischen "A" hat, wobei der eine Schenkel des "A" von einer Serie parallel angeordneter geneigter langer Sortenmagazine (36.3) gebildet wird und der andere Schenkel des "A" von zwei bis drei Sortenmagazinetagen gebildet wird, deren Sortenmagazine kürzer sind als diejenigen des anderen "A"-Schenkels und wobei zwischen den Schenkeln und in der Nähe der Basis des "A" ein Transportband (14) verläuft.

22. Vorrichtung nach einem der Ansprüche 20 oder 21,
**dadurch gekennzeichnet,**
daß die Rutsch- und Ablenkbleche (37,38) in den Raum zwischen den Schenkeln des "A" ragen und das der Schwerkraft folgende Stückgut so lenken, daß es im Bereich der Längsachse des Transportbandes (14) an der Basis des "A" abgelegt wird.

23. Vorrichtung nach einem der Ansprüche 20 bis 22,
**dadurch gekennzeichnet,**
daß jedes Sortenmagazin einen eigenen üblichen Ausschieber oder mehrere Sortenmagazine einer Etage, die zu einem bestimmten Arbeitsblock zusammengefaßt sind, einen verfahrbaren Ausschieber (25) nach einem der Ansprüche 15 bis 18 aufweisen.

## Claims

1. Process for storing numerous types of piece goods on racks in warehouses and for automatically retrieving such goods from said racks, wherein a particular type of piece goods is placed in a sorting magazine and stacked therein, the base surface area of the sorting magazine on the inside corresponding approximately to the maximum outer surface area of the goods to be stacked therein, the sorting magazines are arranged on racks, the piece goods are removed from the magazines with the aid of remote-controlled ejectors, the goods pertaining to a consignment order are fed into a coded consignment container and, after this container has been filled, it is automatically conveyed to the goods delivery station under computer control, the sorting magazines being horizontally aligned in multilevel racks in such a way that the retrieval openings are aligned horizontally in the end walls of the sorting magazines facing the ground, and each magazine level has at least one goods ejector associated therewith, by means of which the goods pertaining to a commissioning order are removed simultaneously from the magazines of each level, characterised in that the goods are collected in a horizontally travelling collection vehicle which extends over all the magazine levels, then placed on or in a conveyor and conveyed to the goods delivery station.

2. Process according to claim 1, characterised in that the sorting magazines are aligned vertically and horizontally in such a way that the retrieval openings are vertically and horizontally aligned, and in that the ordered goods are removed simultaneously from the magazines of the particular vertical row.

3. Process according to claim 1 or 2, characterised in that the goods pertaining to a consignment order are retrieved simultaneously from two multilevel, parallel racks.

4. Process according to one of claims 1 to 3, characterised in that the collection vehicle and the goods ejector are moved jointly along the front of the racks, from one retrieval point to another.

5. Process according to one of the preceding claims, characterised in that the emptying of the collection vehicle and the activity of the conveyor are coordinated, by computer control, in such a way that a coded commissioning container is available for receiving and transporting the collected goods as soon as the commissioning order has been processed.

6. Apparatus for carrying out the process according to one of the preceding claims 1 to 5, comprising a multilevel rack (1) with sorting magazines (8) on each level and at least one goods ejector (25) on each level and at least one computer system which controls remotely actuatable ejectors (25) for retrieving the goods from the sorting magazines (8) and conveying means (14) or containers guided on conveyor belts (14) to which the goods are transferred, characterised by a horizontally movable collection vehicle (17) extending over all the magazine levels which conveys the goods taken from the magazines (8) from the magazine levels to the transporting means (14).

7. Apparatus according to claim 6, characterised in that the sorting magazines (8) have a longitudinal dimension which is greater than their width or depth, their longitudinal axes are arranged substantially vertically, each sorting magazine (8) has a retrieval opening (33) in its end wall nearest the ground, the bottom edges of the retrieval openings (33) of all the sorting magazines on one level are aligned horizontally, the centres of the bottom edges of the retrieval openings (33) of the sorting magazines (8) of different levels are aligned vertically, the sorting magazines (8) have, adjacent to the retrieval openings (33), positioning means for the ejectors (25), the ejectors (25) are arranged in horizontally movable manner in front of and/or below the bottom end of the magazine (8) and the collection vehicle (17) is releasably connected to the ejectors (25).

8. Apparatus according to claim 6 or 7, characterised in that the rack (1) has, on each level, a horizontal slide rail (13) for the ejectors (25), a horizontal carrier rail (10) for carrying the magazines (8) and a horizontal stop rail (12) for positioning the magazines (8).

9. Apparatus according to claim 8, characterised in that the slide rail (13), the magazine carrier rail (10) and the stop rail (12) are attached to support arms (11) which are in turn attached to the rack frame (2), the support arms (11) having a horizontal and a vertical member, the horizontal member being connected to the rack frame (2) at one end and having the vertical member at the opposite end, and the magazine carrier rail (10) and the slide rail (12) moreover being attached to the horizontal member, the stop rail (12) being attached to the end of the vertical member and the three above-mentioned rails being arranged relative to one another in such a way that the sorting magazines (8) stand upright between the carrier rail (10) on the one hand and the slide rail (13) and stop rail (12) on the other hand.

10. Apparatus according to claim 8 or 9, characterised in that the sorting magazines (8) have attachment means (9, 10) by means of which a releasable push-fit connection to the carrier rail (10) can be achieved.

11. Apparatus according to one of claims 6 to 10, characterised in that the collection vehicle (17) is constructed as a shaft or tower and inside has a slideway (7) for the goods retrieved from the sorting magazines (8), this slideway (7) running from the topmost magazine level to at least the lowest magazine level.

12. Apparatus according to claim 11, characterised in that the slideway (7) in the shaft-like collection vehicle (17) consists of sliding surfaces inclined to the vertical, any one magazine level having an associated sliding plate which is attached at its upper end to the frame (3) of the collection vehicle (17) and the lower end of which terminates freely inside the shaft-like collection vehicle (17) roughly at the level where the next sliding plate (7) is attached to an opposing frame section (3) of the collection vehicle (17), the spacing between the free end of one sliding sheet and the start of another sliding sheet being such that the goods falling by gravity are not obstructed on their way down.

13. Apparatus according to claim 11 or 12, characterised in that the collection vehicle (17) has, at its upper end, a wheel frame (4) with rollers (5) by means of which it can be moved on a rail (6) along the front of the racks by means of a drive (15).

14. Apparatus according to one of claims 11 to 13, characterised in that the collection vehicle (17) has, at the level of the retrieval openings (33) of the sorting magazines (8) on each rack level, an inlet opening (16) for the retrieved goods, facing the retrieval openings (33) in the sorting magazines (8).

15. Apparatus according to one of claims 8 to 14, characterised in that the goods ejectors (25) are each displaceably fixed to the slide rail (13) with a sliding shoe (18), the sliding shoe (18) having means (21, 22) for connection to the collection vehicle (17) which make it possible to move the ejectors (25) and the collection vehicle (17) jointly along the front of the racks.

16. Apparatus according to claim 15, characterised in that the ejector (25) has an endless toothed belt (24) with at least one tooth or cam (30) which is guided parallel to the bottom (40) of the sorting magazine (8) via a front guide roller (26) and a rear guide roller (27), in such a way that the tooth or cam (30) engages in a slot (32) in the bottom (40) of the sorting magazine (8), the front guide roller (26) being mounted on the front edge of the rack (1) or sorting magazine (8) and the rear guide roller being mounted on the back (41) of the sorting magazine (8).

17. Apparatus according to one of claims 15 and 16, characterised in that the ejector (25) is guided at the front edge of the rack by the slide shoe (18) on the slide rail (13) and at the back (41) of the magazines (8) on the carrier rail (10).

18. Apparatus according to one of claims 15 to 17, characterised in that, between the front guide roller (26) and the rear guide roller (27), are mounted a front pressing roller (28) and a rear pressing roller (29) which compress the toothed belt (24) of the ejector (25 in the region of the bottom surface (40) of the sorting magazine (8) as much as possible in the vertical direction.

19. Apparatus according to one of claims 6 to 18, characterised in that two multilevel racks (1) are arranged with their fronts parallel and spaced apart so that a collection vehicle (17) movable between the racks (1) is able to retrieve goods from both racks at the same time, by means of the ejectors (25) associated with said vehicle.

20. Apparatus for storing numerous types of piece goods in a rack and for automatically removing said goods from said rack, comprising a multilevel rack (1) with sorting magazines (8) on each level, and at least one goods ejector (25) on each level, and at least one computer system which controls remotely actuatable ejectors (25) for retrieving the piece goods from sorting magazines (8) and conveying means (14) or containers guided on conveyor belts (14) to which the goods are transferred, characterised in that the rack (1) has only two to three sorting magazine levels and from each level a sliding plate (37), optionally cooperating with a deflector plate (38), leads to a conveyor belt (14) in the vicinity of the rack base, the sliding plate conveying the goods retrieved from the magazine (8) from the particular magazine level to the conveyor belt (14).

21. Apparatus according to claim 20, characterised in that the rack (1) is in the form of an asymmetric "A" in cross section, one leg of the "A" being formed by a series of long, inclined, parallel sorting magazines (36.3) and the other leg of the "A" being formed by two to three sorting magazine levels, the sorting magazines of which are shorter than those of the other leg of the "A", a conveyor belt (14) running between the legs of the "A" and near the base of the "A".

22. Apparatus according to one of claims 20 and 21, characterised in that the sliding and deflector plates (37, 38) project into the space between the legs of the "A" and guide the goods, travelling by gravity, in such a way that the goods are deposited in the region of the longitudinal axis of the conveyor belt (14) at the base of the "A".

23. Apparatus according to one of claims 20 to 22, characterised in that each sorting magazine has its own usual ejector, or a plurality of sorting magazines on one level which are combined to form a specific working block have a movable ejector (25) according to one of claims 15 to 18.

## Revendications

1. Procédé pour l'entreposage de nombreuses variétés de marchandises de détail sur des étagères et pour le retrait automatique hors d'étagères dans des entrepôts de grande capacité, dans lequel on dépose respectivement une variété de marchandises de détail dans un magasin réservé à la variété et on l'y empile, la surface inférieure du magasin réservé à une variété correspondant à l'intérieur approximativement à la surface externe maximale de la marchandise de détail qui doit y être empilée, on range sur des étagères les magasins réservés à des variétés, on retire la marchandise de détail hors des magasins à l'aide de dispositifs commandés à distance pour pousser la marchandise de détail vers l'extérieur, on achemine à un réceptacle codé pour la préparation des commandes, les marchandises de détail faisant partie d'un ordre de préparation de commandes, et on transporte le réceptacle après son remplissage, d'une manière automatique et commandée par un ordinateur, en direction du poste de livraison des marchandises,
dans lequel on procède à l'alignement horizontal des magasins réservés à des variétés sur des étagères à plusieurs étages de telle sorte que les ouvertures de retrait pratiquées dans la paroi frontale des magasins réservés à des variétés, du côté du fond, se trouvent en alignement horizontal,
et on attribue, à chaque étage destiné aux magasins, au moins un dispositif pour pousser la marchandise de détail vers l'extérieur et ainsi, on retire simultanément des magasins de chaque étage la marchandise de détail faisant partie d'un ordre de préparation de commandes, caractérisé en ce que l'on rassemble la marchandise de détail dans un véhicule de groupage apte à un déplacement horizontal et s'étendant sur tous les étages destinés aux magasins, on la dépose sur ou dans un mécanisme de transport et on la transporte au poste de livraison des marchandises.

2. Procédé selon la revendication 1, caractérisé en ce qu'on procède à l'alignement vertical et horizontal des magasins réservés à des variétés, de telle sorte que ouvertures de retrait se trouvent en alignement vertical et horizontal, et en ce qu'on retire simultanément les marchandises de détail de la commande hors des magasins d'une rangée verticale respective.

3. Procédé selon la revendication 1 ou 2, caractérisé en ce qu'on retire simultanément de deux étagères à plusieurs étages disposées en parallèle, les marchandises de détail faisant partie d'un ordre de préparation de commandes.

4. Procédé selon l'une quelconque des revendications 1 à 3, caractérisé en ce qu'on déplace conjointement le véhicule de groupage et les dispositifs pour pousser la marchandise de détail vers l'extérieur le long de la face frontale des étagères, d'un endroit de retrait à l'autre.

5. Procédé selon l'une quelconque des revendications précédentes, caractérisé en ce que l'on coordonne le vidage du véhicule de groupage et l'activité du mécanisme de transport d'une manière commandée par ordinateur de telle sorte qu'un réceptacle codé pour la préparation des commandes se trouve disponible pour le retrait et le transport ultérieur des marchandises de détail regroupées, dès que l'ordre de préparation des commandes a été exécuté.

6. Dispositif pour la mise en oeuvre du procédé selon l'une quelconque des revendications précédentes 1 à 5, comprenant une étagère (1) à plusieurs étages munie de magasins (8) réservés à des variétés à chaque étage, et au moins un dispositif (25) pour pousser la marchandise de détail vers l'extérieur à chaque étage, et au moins une installation de calcul qui commande les dispositifs de poussée vers l'extérieur (25) aptes à être commandés à distance pour retirer la marchandise de détail hors des magasins (8) réservés à des variétés, ainsi que des moyens de transport (14) ou des réceptacles guidés sur des bandes transporteuses (14), auxquels on transmet la marchandise de détail, caractérisé par un véhicule de groupage (17) apte à se déplacer horizontalement et s'étendant sur tous les étages destinés aux magasins, qui transporte les marchandises de détail retirées des magasins (8) depuis les étages destinés aux magasins jusqu'aux moyens de transport (14).

7. Dispositif selon la revendication 6, caractérisé en ce que les magasins (8) réservés à des variétés possèdent une extension longitudinale qui est supérieure à leur largeur ou à leur profondeur,
leur axe longitudinal est disposé essentiellement à la verticale,
chaque magasin (8) réservé à une variété présente une ouverture de retrait (33) pratiquée dans la paroi frontale du côté du fond,
les arêtes inférieures des ouvertures de retrait (33) de tous les magasins d'un étage, réservés à des variétés se trouvent en alignement horizontal,
les milieux des arêtes inférieures des ouvertures de retrait (33) des magasins (8) de différents étages, réservés à des variétés, se trouvant en alignement vertical,
les magasins (8) réservés à des variétés présentent, outre les ouvertures de retrait (3), des moyens de positionnement pour les dispositifs de poussée vers l'extérieur (25),
les dispositifs de poussée vers l'extérieur (25) sont disposés pour pouvoir se déplacer à l'horizontale devant et/ou en dessous de l'extrémité des magasins (8) du côté du fond, et
le véhicule de groupage (17) est relié de manière amovible aux dispositifs de poussée vers l'extérieur (35).

8. Dispositif selon la revendication 6 ou 7, caractérisé en ce que l'étagère (1) présente, à chaque étage, un rail de glissement horizontal (13) pour les dispositifs de poussée vers l'extérieur (25), un rail de support horizontal (10) pour porter les magasins (8) et un rail de butée horizontal (12) pour le positionnement des magasins (8).

9. Dispositif selon la revendication 8, caractérisé en ce que le rail de glissement (13), le rail de support de magasins (10) et le rail de butée (12) sont fixés à des bras de support (11) qui, à leur tour, sont fixés au cadre d'étagère (2), les bras de support (11) présentant une branche horizontale et une branche verticale, la branche horizontale étant reliée à une de ses extrémités au cadre d'étagère (2), la branche verticale étant présente à l'extrémité opposée, et en outre, le rail de support de magasins (10) et le rail de glissement (12) étant fixés à la branche horizontale, le rail de butée (12) est fixé à l'extrémité de la branche verticale, et les trois rails mentionnés sont disposés l'un par rapport à l'autre de telle sorte que les magasins (8) réservés à des variétés sont dressés entre le rail de support (10) d'une part, et le rail de glissement (13) et le rail de butée (12) d'autre part.

10. Dispositif selon l'une quelconque des revendications 8 ou 9, caractérisé en ce que les magasins (8) réservés à des variétés présentent des moyens de fixation (9, 10) avec lesquels on peut obtenir une liaison d'enfichage amovible au rail de support (10).

11. Dispositif selon l'une quelconque des revendications 6 à 10, caractérisé en ce que le véhicule de groupage (17) est réalisé en forme de puits, respectivement en forme de tour, et présente, dans son espace interne, une bande de glissement (7) procurant un guidage, depuis le niveau de l'étage supérieur destiné aux magasins jusqu'au moins le niveau de l'étage inférieur destiné aux magasins, pour la marchandise de détail retirée des magasins (8) réservés à des variétés.

12. Dispositif selon la revendication 11, caractérisé en ce que la bande de glissement (7), dans le véhicule de groupage (17) en forme de puits, est constituée par des surfaces de glissement inclinées par rapport à la verticale, dans lequel une tôle de glissement est attribuée à un étage destiné aux magasins respectivement qui est fixée, respectivement avec son extrémité supérieure, au cadre (3) du véhicule de groupage (13) et dont l'extrémité inférieure se termine librement dans l'espace interne du véhicule de groupage (17) en forme de puits approximativement au niveau où la tôle de glissement (7) qui suit, est fixée à une partie de cadre opposée (3) du véhicule de groupage (17), et dans lequel la distance séparant l'extrémité libre de la première tôle de glissement et le début de l'autre tôle de glissement est telle que la marchandise de détail suivant la force de gravitation n'est pas gênée dans sa trajectoire descendante.

13. Dispositif selon la revendication 11 ou 12, caractérisé en ce que le véhicule de groupage (17) présente, à son extrémité supérieure, un chariot (4) à roulettes (5) avec lesquelles, à l'aide d'un entraînement (15), il peut se déplacer sur un rail (6) le long de la face frontale de l'étagère.

14. Dispositif selon l'une quelconque des revendications 11 à 13, caractérisé en ce que le véhicule de groupage (17) présente, au niveau des ouvertures de retrait (33) des magasins (8) de chaque étage d'étagère, réservés à des variétés, une ouverture d'introduction (16) tournée vers les ouvertures de retrait (33) des magasins (8) réservés à des variétés, pour la marchandise de détail retirée.

15. Dispositif selon l'une quelconque des revendications 8 à 14, caractérisé en ce que les dispositifs (25) pour pousser la marchandise de détail vers l'extérieur sont fixés respectivement avec un sabot de glissement (18) de manière à pouvoir coulisser contre le rail de glissement (13), le sabot de glissement (18) présentant des moyens de liaison (21, 22) au véhicule de groupage (17), qui permettent de déplacer conjointement le long de la face frontale de l'étagère, les dispositifs (25) de poussée vers l'extérieur et le véhicule de groupage (17).

16. Dispositif selon la revendication 15, caractérisé en ce que le dispositif (25) de poussée vers l'extérieur présente une courroie dentée sans fin (24) comprenant au moins une dent, respectivement une came (30), qui est guidée à l'intervention d'une poulie de renvoi avant (26) et d'une poulie de renvoi arrière (27) parallèlement au fond (40) du magasin (8) réservé à une variété de telle sorte que la dent, respectivement la came (30), vient s'engrener dans une fente (32) pratiquée dans le fond (40) du magasin (8) réservé à une variété, la poulie de renvoi avant (26) étant disposée contre la face frontale de l'étagère (1), respectivement des magasins (8) réservés à des variétés, et la poulie de renvoi arrière étant fixée contre le côté dorsal (41) des magasins (8) réservés à des variétés.

17. Dispositif selon l'une quelconque des revendications 15 ou 16, caractérisé en ce que le dispositif (25) de poussée vers l'extérieur est guidé contre la face frontale de l'étagère à l'intervention du sabot de glissement (18) contre le chariot de glissement (13) et, du côté dorsal (41) des magasins (8), contre le rail de support (10).

18. Dispositif selon l'une quelconque des revendications 15 à 17, caractérisé en ce que, entre la poulie de renvoi avant (26) et la poulie de renvoi arrière (27), sont disposés respectivement un rouleau de pression avant (28) et un rouleau de pression arrière (29) qui compriment autant que possible en direction verticale les courroies dentées (24) du dispositif (25) de poussée vers l'extérieur dans la zone de la surface inférieure (40) du magasin (8) réservé à une variété.

19. Dispositif selon l'une quelconque des revendications 6 à 18, caractérisé en ce que deux étagères (1) à plusieurs étages sont disposées avec leurs côtés frontaux écartés en parallèle de telle sorte qu'un véhicule de groupage (17), qui peut se déplacer entre les étagères (1) avec les dispositifs (25) de poussée vers l'extérieur qui lui sont attribués, peut retirer simultanément des marchandises de détail hors des deux étagères.

20. Dispositif pour l'entreposage de nombreuses variétés de marchandises de détail sur une étagère et pour le retrait automatique de ces dernières hors d'une étagère, comprenant une étagère (1) à plusieurs étages, munie de magasins (8) réservés à des variétés à chaque étage, et au moins un dispositif (25) pour pousser la marchandise de détail vers l'extérieur à chaque étage, et au moins une installation de calcul qui commande les dispositifs de poussée vers l'extérieur (25), aptes à être commandés à distance pour retirer la marchandise de détail hors des magasins (8) réservés à des variétés, ainsi que des moyens de transport (14) ou des réceptacles guidés sur des bandes transporteuses (14), auxquels on transmet la marchandise de détail, caractérisé en ce que
l'étagère (1) ne présente que 2 à 3 étages destinés aux magasins réservés à des variétés et, à partir de chaque étage, une tôle de glissement (37), éventuellement en collaboration avec une tôle de déviation (38), procure un guidage en direction d'une bande de transport (14) à proximité du fond de l'étagère, la tôle de glissement transportant les marchandises de détail retirées du magasin (8) de l'étage respectif destiné aux magasins à la bande transporteuse (14).

21. Dispositif selon la revendication 20, caractérisé en ce que l'étagère (1) possède, en section transversale, la forme d'un "A" asymétrique, la première branche du "A" étant formée d'une série de longs magasins (36.3) réservés à des variétés, inclinés et disposés en parallèle, et l'autre branche du "A" étant formée par 2 à 3 étages destinés aux magasins réservés à des variétés, dont les magasins réservés à des variétés sont plus courts que ceux de l'autre branche du "A" et dans lequel, entre les branches et à proximité de la base du "A", s'étend une bande transporteuse (14).

22. Dispositif selon l'une quelconque des revendications 20 ou 21, caractérisé en ce que les tôles de glissement et de déviation (37, 38) font saillie dans l'espace ménagé entre les branches du "A" et guident la marchandise de détail suivant la force de gravitation de telle sorte qu'elle soit déposée dans la zone de l'axe longitudinal de la bande transporteuse (14) à la base du "A".

23. Dispositif selon l'une quelconque des revendications 20 à 22, caractérisé en ce que chaque magasin réservé à une variété présente un dispositif habituel de poussée vers l'extérieur qui lui est propre, ou bien plusieurs magasins d'un étage, réservés à des variétés, qui sont regroupés en un bloc de travail déterminé, présentent un dispositif de poussée vers l'extérieur (25) apte à se déplacer, selon l'une quelconque des revendications 15 à 18.
